# EUROPÄISCHE PATENTSCHRIFT

(11) **EP 2 995 791 B1**
(45) Veröffentlichungstag und Bekanntmachung des Hinweises auf die Patenterteilung: **20.12.2017**
(21) Anmeldenummer: 15001148.4
(22) Anmeldetag: 18.04.2015
(51) Int. Cl.: F01N 13/10, F01K 23/06, F02B 41/00, F28D 21/00, F01N 5/02, F02G 5/02, F02G 5/04, F28D 7/16, F01K 23/14

(54) **BRENNKRAFTMASCHINE MIT INNER-MOTORISCHER ABGASWÄRMENUTZUNG**
COMBUSTION ENGINE WITH WASTE GAS HEAT USE INSIDE MOTOR
MOTEUR À COMBUSTION INTERNE AYANT UN SYSTÈME DE RÉCUPÉRATION DE LA CHALEUR DES GAZ D'ÉCHAPPEMENT INTÉGRÉ

(30) Priorität: 12.09.2014 DE 102014013285
(43) Veröffentlichungstag der Anmeldung: 16.03.2016
(73) Patentinhaber: MAN Truck & Bus AG, 80995 München (DE)
(72) Erfinder: Schlee, Dimitri, 96052 Bamberg (DE)
(74) Vertreter: Liebl, Thomas

(56) Entgegenhaltungen:
- WO-A2-2010/000284
- CA-A1- 2 247 759
- DE-A1- 2 750 549
- DE-A1- 4 141 051
- DE-A1-102009 032 045

## Beschreibung

Die Erfindung betrifft eine Brennkraftmaschine mit innermotorischer Abgaswärmenutzung nach dem Oberbegriff des Anspruchs 1, ein Verfahren nach Anspruch 13 sowie ein Fahrzeug nach Anspruch 14.

Eine bekannte Brennkraftmaschine mit innermotorischer Abgaswärmenutzung (DE 27 50 549) ist als Vierzylinderreihenmotor ausgebildet, bei dem alle vier Zylinder mit ihren Kraftübertragungselementen mit einer gemeinsamen Kurbelwelle gekoppelt sind. Drei der vier Zylinder sind als Verbrennungszylinder ausgebildet und werden mit einem herkömmlichen Verbrennungsprozess betrieben, wobei die durch Kraftstoffverbrennung entstehende Abgaswärme mittels zumindest eines Wärmetauschers an ein Arbeitsmedium zu dessen Verdampfung in einem geschlossenen Arbeitsmedium-Kreisprozess übertragen wird. Einer der vier Zylinder wird als "Dampfzylinder" betrieben, dem das im wenigstens einen Wärmetauscher hocherhitzte Arbeitsmedium als Dampf zugeführt wird. Im Dampfzylinder expandiert der Dampf und leistet dabei mechanische Arbeit, die innermotorisch direkt auf die Kurbelwelle übertragen wird. Das entspannte Arbeitsmedium-Gas wird dann in einem nachgeschalteten Kondensator verflüssigt und mittels einer Speisepumpe wieder mit höherem Druckniveau dem Arbeitsmedium-Kreisprozess zugeführt. Bei der bekannten Brennkraftmaschine mit innermotorischer Abgaswärmenutzung ist somit ein an sich bekannter Dampfmotor in einen Verbrennungsmotor integriert.

Der Abgas/Arbeitsmedium-Wärmetauscher ist hier in einem als Schalldämpfer verwendeten Auspuffrohr ausgebildet. Dieser Wärmetauscher liegt somit hier bereits in einem relativ großen Abstand zu den Verbrennungszylindern, so dass das Temperaturniveau des Abgases im Wärmetauscher bereits deutlich unter die Verbrennungstemperatur in den Verbrennungszylindern abgefallen ist. Damit wird die zwischen den Verbrennungszylindern und dem Wärmetauscher bereits abgegebene Wärme nicht genutzt und damit auch nicht im Dampfzylinder in mechanische Arbeit umgesetzt.

Bei einer weiter bekannten Brennkraftmaschine mit einer Abgaswärmenutzung in Verbindung mit einer Dampfturbine (DE 41 41 051 A1) wird ein hinsichtlich der Abgaswärmenutzung verbesserter Wärmetauscher Abgas/Arbeitsmedium vorgeschlagen, bei dem ein Rohrleitungssystem mit einem Teil des Abgassammelkrümmers und des Auspuffrohrs in Wärmeaustauschkontakt steht, in dem ein durch die aufgenommene Wärme verdampfbares Arbeitsmedium strömt. Nachteilig bildet aber das Rohrleitungssystem im Abgaskrümmer einen relativ großen Strömungswiderstand in Verbindung mit einem Abgasgegendruck. Um einen solchen Strömungswiderstand auf einen noch tolerierbaren Wert zu begrenzen, ist auch nur ein relativ kleiner Durchmesser der Rohrleitungen im Abgaskrümmer möglich, wodurch auch die wärmeübertragende Fläche und damit die Wärmeübertragung begrenzt ist.

Aus der weiteren DE 10 2009 032 045 A1 ist ein doppelwandiges Rohr bekannt, das einen Rohrmantel mit einer Außenwand und einer Innenwand sowie dazwischen parallel zueinander verlaufende Kanäle aufweist. Der Rohrmantel besteht dabei aus einem Außen- und einem Innenrohr, von denen mindestens eines in Rohrinnenrichtung Erhebungen aufweist, wobei durch Übereinanderliegen derselben parallel verlaufende Mantelkanäle gebildet sind.

Die WO 2010/000284 A2 offenbart eine Brennkraftmaschine mit Mitteln zur Umwandlung von thermischer Abgasenergie in mechanische Leistung, bei der in den Abgasstrang der Brennkraftmaschine ein primärer Wärmetauscher/Dampferzeuger eingesetzt ist. Dieser Wärmetauscher/Dampferzeuger ist Teil einer geschlossenen Dampfkraftanlage, die eine vor dem Wärmetauscher/Dampferzeuger liegende Speisepumpe, eine dem Wärmetauscher/Dampferzeuger nachgeordnete Dampfturbine oder einen Dampfmotor und einer der Dampfturbine oder dem Dampfmotor nachgeordneten Kondensator umfasst. Dabei ist der primäre Wärmetauscher/Dampferzeuger im Abgasstrang vor einer Einrichtung zur Abgasnachbehandlung angeordnet. Konkret kann der primäre Wärmetauscher/Dampferzeuger hier in Form eines doppelschaligen Abgaskrümmersystems am Zylinderkopf der Brennkraftmaschine ausgebildet sein, wobei innenliegende Abgaskanäle vom Abgas und diese einhüllende Schalenräume vom Medium des Dampfkraftprozesses durchströmt sind.

Aufgabe der Erfindung ist es, eine gattungsgemäße Brennkraftmaschine mit innermotorischer Abgaswärmenutzung so weiterzubilden, dass höhere Temperaturen des Arbeitsmediums und damit ein höherer Wirkungsgrad und eine höhere Leistung erreicht werden.

Diese Aufgabe wird gelöst mit den Merkmalen der unabhängigen Ansprüche. Vorteilhafte Ausgestaltungen sind Gegenstand der Unteransprüche.

Gemäß Anspruch 1 ist eine Brennkraftmaschine mit innermotorischer Abgaswärmenutzung mit mindestens zwei Zylindern vorgesehen, die mit ihren Kraftübertragungselementen mit einer gemeinsamen Kurbelwelle gekoppelt sind, wobei wenigstens ein Zylinder als Verbrennungszylinder mit einem Verbrennungsprozess betrieben wird und von dort das Abgas in einem Abgaskrümmer abgeführt wird, die dabei anfallende Wärme eines Abgases mittels zumindest eines Wärmetauschers an ein Arbeitsmedium zu dessen Verdampfung in einem geschlossenen Arbeitsmedium-Kreisprozess übertragen wird, und wenigstens ein Zylinder als Dampfzylinder mit Arbeitsmediumdampf betrieben wird. Erfindungsgemäß ist zumindest ein Wärmetauscher in der Wandung eines Abgaskrümmers dergestalt integriert, dass in der Wandung wenigstens ein Strömungskanal für das Arbeitsmedium angeordnet ist.

Mit einer solchen Anordnung besteht kein bzw. nur ein sehr geringer Strömungswiderstand/Abgasgegendruck innerhalb des Abgaskrümmers, da insbesondere im Abgaskrümmer keine einen Strömungswiderstand bildende Rohrleitungen angeordnet sind. Weiter wird in der Wandung eine gute und hohe Wärmeübertragung vom Abgas auf das Arbeitsmedium erreicht. Zudem wird durch das in der Wandung strömende Arbeitsmedium die Kühlwirkung auf den Abgaskrümmer erhöht, woraus vorteilhaft eine geringere Materialbeanspruchung durch geringere betriebsmäßige Temperaturunterschiede resultiert. Vorteilhaft können dadurch ein kostengünstigeres Material für den Abgaskrümmer verwendet und/oder die Wärmedämmung um den Abgaskrümmer geringer dimensioniert werden. Zudem werden der Motor und das Kurbelgehäuse nach einem Motorstart schneller erwärmt, so dass vorteilhaft die Aufwärmphase des Motors und des Kurbelgehäuses verkürzt wird.

Grundsätzlich kann eine innermotorische Abgaswärmenutzung in Verbindung mit einem erfindungsgemäß in der Wandung eines Abgaskrümmers integrierten Wärmetauscher bei allen Otto-, Diesel-, und Wankelmotoren mit und ohne Aufladung verwendet werden. Die geschätzte Energiemenge aus der Abgaswärme, die man als mechanische Energie zurückgewinnen kann, liegt bei 10 bis 20%. Daher werden vorzugsweise mehrere Verbrennungszylinder vorgesehen, wobei die Anzahl der Verbrennungszylinder größer ist als die Anzahl der Dampfzylinder, in einem bevorzugten Verhältnis von 5:1. Bei einem Sechszylindermotor ergibt dies fünf Verbrennungszylinder und einen Dampfzylinder, insbesondere in einem Reihenmotor. Entsprechend ergeben sich bei einem Zwölfzylindermotor zehn Verbrennungszylinder und zwei Dampfzylinder, welche als V-Motor jeweils in zwei Zylinderbänken angeordnet sein können.

Die für den Dampfbetrieb vorgesehenen Dampfzylinder können von vornherein an diese Betriebsart mit entsprechender Werkstoffwahl und Ventilsteuerung für einen Zweitaktbetrieb angepasst werden. Alternativ können auch Verbrennungszylinder einer herkömmlichen Brennkraftmaschine zu Dampfzylindern umgerüstet werden, wobei beispielsweise alle vier Ventile zu Auslassventilen umgerüstet werden und die Nockenwelle mit zwei Nocken pro Umdrehung für einen Zweitaktbetrieb angepasst wird. Das Arbeitsmedium kann über eine im Zylinderkopf vorhandene Kerzenbohrung mittels "Dampfdosierer" in den ehemaligen Brennraum des umgerüsteten Verbrennungszylinders gefördert werden.

Bei einem Mehrzylindermotor weist der Abgaskrümmer ein langgestrecktes Abgassammelrohr auf, an das mehrere Verbrennungszylinder in Reihe angeschlossen sind. Eine besonders günstige Anordnung der Strömungskanäle für das Arbeitsmedium mit hoher Wärmeübertragung vom Abgas auf das Arbeitsmedium mit geringem Strömungswiderstand für das Abgas ergibt sich, wenn eine Mehrzahl von Strömungskanälen im Wandungsumfang verteilt in Längsrichtung des Abgassammeirohrs verlaufen.

Zudem ist es vorteilhaft, an einem Ende einer Reihe von Verbrennungszylindern, die am Abgaskrümmer angeschlossen sind, einen Dampfzylinder anzuordnen. In einer funktionell günstigen Anordnung liegen der Abgasausgang des Abgassammeirohrs und die Arbeitsmediumzuführung zu der Kanalanordnung in der Abgassammelrohrwandung gegenüberliegend zum Dampfzylinder und der Arbeitsmediumaustritt des maximal erhitzten Arbeitsmediums liegt, vorzugsweise unmittelbar, beim Dampfzylinder.

Zu einer möglichst hohen Wärmeübertragung in Verbindung mit einer Kontaktflächenvergrößerung zwischen einer radial liegenden Mantelfläche des Abgaskrümmers, insbesondere dessen Abgassammeirohrs und des durchströmenden Abgases sind an der Mantelfläche Flächenstrukturen, insbesondere Längsrippen, angeordnet, die angegossen sein können. Für eine weitere Steigerung der Wärmeübertragung durch eine Vergrößerung der Verweildauer des durch die Strömungskanäle strömenden Arbeitsmediums kann dazu die Kanalanordnung in der Abgaskrümmerwandung mäanderförmig gestaltet werden.

Um möglichst viel Energie aus der Abgaswärme zurückzugewinnen und dabei möglichst hohe Arbeitsmediumtemperaturen zu erreichen, ist es von Vorteil, mit wenigstens zwei Wärmetauschern zu arbeiten. Dazu kann dem in der Wandung eines Abgaskrümmers ausgebildeten Wärmetauscher als Hochtemperatur-Wärmetauscher stromauf bezüglich des Arbeitsmediums und stromab bezüglich des Abgases wenigstens ein weiterer, abgasbeheizter Niedertemperatur-Wärmetauscher vorgeschaltet werden. Ein solcher Niedertemperatur-Wärmetauscher kann in einer Abgasanlage nach einem Katalysator in einem Auspuffrohr ausgebildet werden. Dort ist eine Erwärmung des Arbeitsmediums je nach Dimensionierung des Wärmetauscher auf zirka 400° bis 600°C möglich mit einer weiter erreichbaren Temperaturerhöhung im Hochtemperatur-Wärmetauscher auf zirka 700°C. Die beiden Wärmetauscher liegen dabei im Hochdruckbereich des Arbeitsmedium-Kreislaufs zwischen der Speisepumpe und dem/den Dampfzylindern vorzugsweise bei einem Druck von zirka 60 bar.

Durch die stufenweise Erhitzung des Arbeitsmediums in wenigstens zwei in Reihe geschalteten Wärmetauschern ist eine besonders effiziente Erwärmung des Arbeitsmediums möglich. Bei einer Motorausführung mit zwei Zylinderbänken kann je nach den Gegebenheiten jeder Zylinderbank ein Niedertemperatur-Wärmetauscher zugeordnet werden oder ein einziger Niedertemperatur-Wärmetauscher ist für beide Zylinderbänke vorgesehen.

Bei einer aufgeladenen Brennkraftmaschine, die zusätzlichen zu den Verbrennungszylindern als "Turbomotor" einen Abgasturbolader mit einem Ladeluftkühler sowie einen Kühlwasserkühler umfasst, können für eine weitere Vorerwärmung zusätzliche Niedertemperatur-Wärmetauscher realisiert werden, die eine weitere Wirkungsgradsteigerung bei der Abgaswärmenutzung ermöglichen. Dabei wird der Arbeitsmediumkreislauf nach der Speisepumpe durch den Ladeluftkühler als Ladeluft-Wärmetauscher und durch den Kühlwasserkühler als Kühlwasser-Wärmetauscher geleitet, wobei beide Wärmetauscher noch vor den vorstehend geschilderten Wärmetauschern angeordnet sind. Dabei wird das relativ kühlere Arbeitsmedium nach dem Kühlwasser-Wärmetauscher (> 120°C; zirka 60 bar) einem Eingangsbereich des Misch-Wärmetauschers und das relativ heißere Arbeitsmedium nach dem Ladeluft-Wärmetauscher (> 200°C; zirka 60 bar) einem mittleren Bereich des Misch-Wärmetauschers zugeführt, wobei der Misch-Wärmetauscher dem vorstehend in Verbindung mit dem Auspuffrohr genannten Niedertemperatur-Wärmetauscher und/oder dem Hochtemperatur-Wärmetauscher vorgeschaltet ist. Im Kühlwasser-Wärmetauscher ist ein größerer Anteil des Arbeitsmediums bei relativ niedrigerer Temperatur aufwärmbar und im Ladeluft-Wärmetauscher ist dagegen ein geringerer Anteil des Arbeitsmediums bei höherer Temperatur aufwärmbar. Dies wird durch die unterschiedlichen Zuführungsstellen am Misch-Wärmetauscher zur Vergleichmäßigung der Temperatur und mit einer vorteilhaften Auswirkung auf den Gesamtwirkungsgrad berücksichtigt.

Je nach den aktuellen Gegebenheiten kann es zweckmäßig/erforderlich sein, in der Arbeitsmedium-Kanal/-Leitung zwischen dem Hochtemperatur-Wärmetauscher und dem Dampfzylinder eine Drossel als feste Drosselstelle oder vorzugsweise als einstellbare Drossel anzuordnen. Über eine solche Drossel/Drosselstelle kann der Druck gezielt eingestellt und insbesondere so verringert werden, dass das vor der Drosselstelle vorzugsweise noch flüssige Arbeitsmedium nach der Drossel und vor dem Eintritt in einen Dampfzylinder verdampft.

Im Dampfbetrieb wird nach dem Dampfzylinder der entspannte Dampf des Arbeitsmediums einem Kondensator zugeführt, der als Kondensations-wärmetauscher oder Kondensationskühler ausgebildet sein kann. Das dort verflüssigte Arbeitsmedium wird in einen Vorratsbehälter geleitet, welchem eine Speisepumpe zur Förderung des Arbeitsmediums zu den nachgeordneten Wärmetauschern in Verbindung mit einer Druckerhöhung nachgeschaltet ist.

Während der Motorstart-/Aufwärmphase ist aufgrund von noch nicht ausreichender Abgaswärme das Arbeitsmedium noch nicht verdampfbar und soll im flüssigen Zustand möglichst nicht in einen Dampfzylinder gelangen. Es wird daher vorgeschlagen, für das Arbeitsmedium eine druck- und/oder temperaturabhängig schaltbare Bypass-Leitung für den Dampfzylinder vorzusehen, mit der bei noch ausreichender Temperatur für einen Dampfbetrieb noch ganz oder teilweise flüssiges Arbeitsmedium am Dampfzylinder vorbei zum Kondensator/Vorratsbehälter leitbar ist. Die Schaltung der Bypassleitung kann sensorgesteuert automatisiert sein.

Als Arbeitsmedium eignet sich prinzipiell jede in den prozessbedingt vorgegebenen Temperaturbereichen verdampfbare Flüssigkeit. Besonders geeignet als Arbeitsmedium sind Ethanol oder destilliertes Wasser.

Wenn ein Arbeitsmedium-Blowby bei der Kompression im Dampfzylinder, das heißt an den Kolbenringen vorbeiströmendes Arbeitsmedium/Dampf, auftritt, muss dieses aus dem Motorinnenraum evakuiert werden. Bei einem Arbeitsmedium Wasser ist das Arbeitsmedium-Blowby Wasserdampf, der dann im Motorinnenraum zu Wasser kondensieren kann. Falls ein solches Problem auftritt, muss das Arbeitsmedium-Blowby aus dem Motorinnenraum mittels wenigstens eines Dampfabscheiders oder durch wenigstens eine Lüftungsöffnung evakuiert werden. Im Fall von Wasserdampf als evakuiertes Arbeitsmedium-Blowby kann dieser der Ansaugluft zugeführt werden.

Erfindungsgemäß ist die Brennkraftmaschine alternativ zwischen einem kombinierten Verbrennungsbetrieb/Dampfbetrieb und einem reinen Verbrennungsbetrieb mit allen Zylindern umschaltbar ausgebildet. Ein reiner Verbrennungsbetrieb mit allen Zylindern als Verbrennungszylinder kann insbesondere in der Aufwärmphase durchgeführt werden, wobei dann der/die Dampfzylinder als Verbrennungszylinder genutzt werden. Dazu sind der/die Dampfzylinder für den reinen Verbrennungsbetrieb erfindungsgemäß so zu ergänzen/modifizieren, dass jeweils an einem Dampfzylinder zusätzlich zu einem Dampfeinlassventil und Dampfauslassventil eine schaltbare Treibstoffzuführung gegebenenfalls mit Zündeinrichtung, ein dem Verbrennungsbetrieb zugeordnetes Einlassventil und Auslassventil mit schaltbarer Ventilsteuerung und eine Abgasleitung zum Abgaskrümmer angeordnet sind.

Wenn der/die Dampfzylinder als Verbrennungszylinder in einem Teillastbereich genutzt oder gesperrt werden sollen, falls die Wärmeenergie nicht ausreicht den Dampfzylinder auszulasten, wird ein erfindungsgemäßer Dampfpuffer, beispielsweise als thermoisolierte Gasflasche benötigt, wo sich der Dampf sammeln kann. Der Gaspuffer wird erfindungsgemäß zwischen dem (letzten) Hochtemperatur-Wärmetauscher und dem Dampfzylinder angeschlossen. Die Ein- bzw. Auslassventile des Dampfzylinders werden je nach Betrieb betätigt oder nicht betätigt, wobei die Ventilbetätigung sensorgesteuert und automatisiert durchführbar ist. Ein dazu modifizierter Dampfzylinder braucht mindestens drei Ventile: Lufteinlassventil, Abgasauslassventil und Dampfauslassventil. Für den Verbrennungsbetrieb wird zudem eine kleine Injektor- bzw. zentrische Kerzen-Öffnung nötig und für den Dampfbetrieb eine Dampfeinlassöffnung bzw. ein Dampfeinlassventil.

Die sich mit der erfindungsgemäßen Verfahrensführung und dem erfindungsgemäßen Fahrzeug ergebenden Vorteile entsprechen den vorstehend genannten Vorteilen und werden daher hier nicht mehr wiederholt.

Die Erfindung wird anhand einer Zeichnung weiter erläutert.

Es zeigen:
- Fig. 1: eine schematische Draufsicht auf eine V12-Brennkraftmaschine mit innermotorischer Abgaswärmenutzung ohne Aufladung,
- Fig. 2: eine perspektivische Ansicht eines Abgaskrümmers mit einem stirnseitigen Querschnitt,
- Fig. 3: den Abgaskrümmer nach Fig. 2 mit einem zum Querschnitt nach Fig. 2 versetzt liegenden Querschnitt,
- Fig. 4: eine schematische Darstellung zur mäanderförmigen Kanalführung der Strömungskanalanordnung in der Wandung des Abgaskrümmers nach den Fig. 2 und 3,
- Fig. 5: eine schematische Darstellung einer V12-Brennkraftmaschine mit innermotorischer Abgaswärmenutzung mit Aufladung,
- Fig. 6: eine vergrößerte Darstellung des Bereichs A aus Fig. 5 als Draufsicht auf die Ventilanordnung eines Dampfzylinders, und
- Fig. 7: ein Funktionsschema eines Arbeitsmediumkreislaufs eines Sechs-Zylinder-Turbomotors.

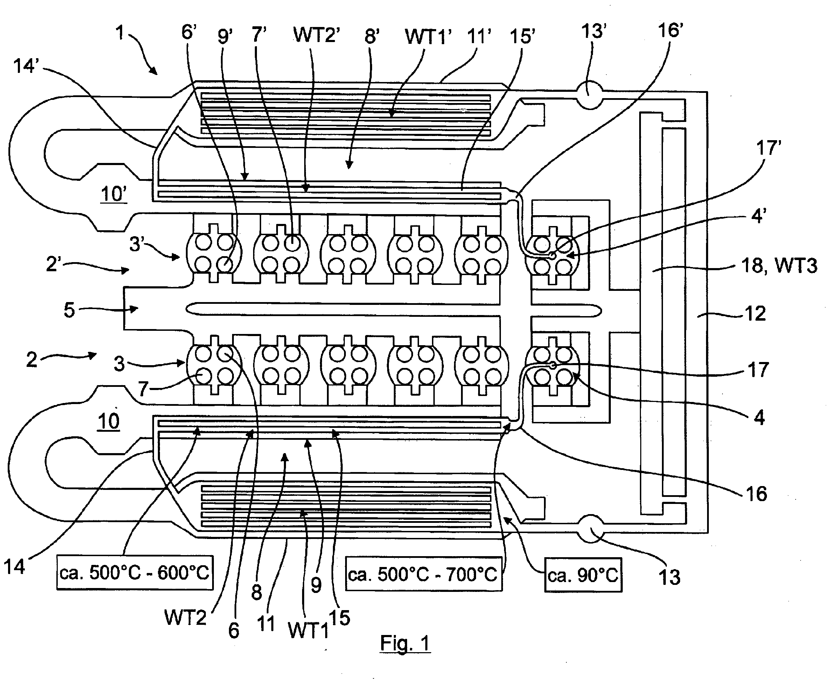

In Fig. 1 ist schematisch und beispielhaft eine Draufsicht auf eine V12-Brennkraftmaschine 1 dargestellt mit zwei Zylinderbänken 2, 2' mit jeweils sechs Zylindern, von denen jeweils fünf in Reihe liegende Zylinder 3, 3' als Verbrennungszylinder betrieben werden. Der jeweils am (rechten) Ende der Reihe der Verbrennungszylinder 3, 3' liegende Zylinder wird als Dampfzylinder 4, 4' betrieben. Die Verbrennungszylinder 3, 3' und die Dampfzylinder 4, 4' sind mit ihren Kraftübertragungselementen (Kolben, Pleuel, etc.) mit einer gemeinsamen (nicht dargestellten) Kurbelwelle gekoppelt.

Die Verbrennungszylinder 3, 3' bilden somit einen konventionellen Zehn-Zylinder-Verbrennungsmotor mit einer jeweils zugeordneten Ansaugstrecke 5 mit jeweils einer Luftverteilerröhre. Die Verbrennungszylinder 3, 3' weisen für den konventionellen Verbrennungsprozess im Saugmotorbetrieb jeweils übliche Einlassventile 6, 6' und Auslassventile 7, 7' auf.

Der mit den Auslassventilen 7, 7' gesteuerte Abgasstrom wird jeweils einem, einer Zylinderbank 2, 2' zugeordneten Abgaskrümmer 8, 8' zugeführt, der jeweils ein langgestrecktes Abgassammelrohr 9, 9' aufweist, welches sich über die Länge der Reihe der Verbrennungszylinder 3, 3' erstreckt.

An die Abgassammelrohre 9, 9' schließt sich jeweils ein Katalysator 10, 10' an, nach dem das Abgas jeweils in ein Auspuffrohr 11, 11', zum Beispiel als Bestandteil einer Schalldämpferanlage und von dort ins Freie gelangt.

Die Dampfzylinder 4, 4' werden in einem geschlossenen Arbeitsmediumprozess betrieben:

Es sind jeweils gleiche Kreisprozesse für die beiden Zylinderbänke 2, 2' bzw. die Dampfzylinder 4, 4' vorgesehen, so dass im Folgenden nur der Kreisprozess für die (untere) Zylinderbank 2 bzw. den Gaszylinder 4 beschrieben wird. Aus einem Sammelbehälter 12 für das Arbeitsmedium, beispielsweise destilliertes Wasser oder Ethanol, wird mit einer Speisepumpe 13 das Arbeitsmedium mit zirka 90°C und einem Druck von zirka 60 bar einem Niedertemperatur-Wärmetauscher WT1 zugeführt, der hier als Röhren-Wärmetauscher ausgebildet ist und vom Abgas nach dem Katalysator 10 stromab im Gegenstromprinzip umströmt ist.

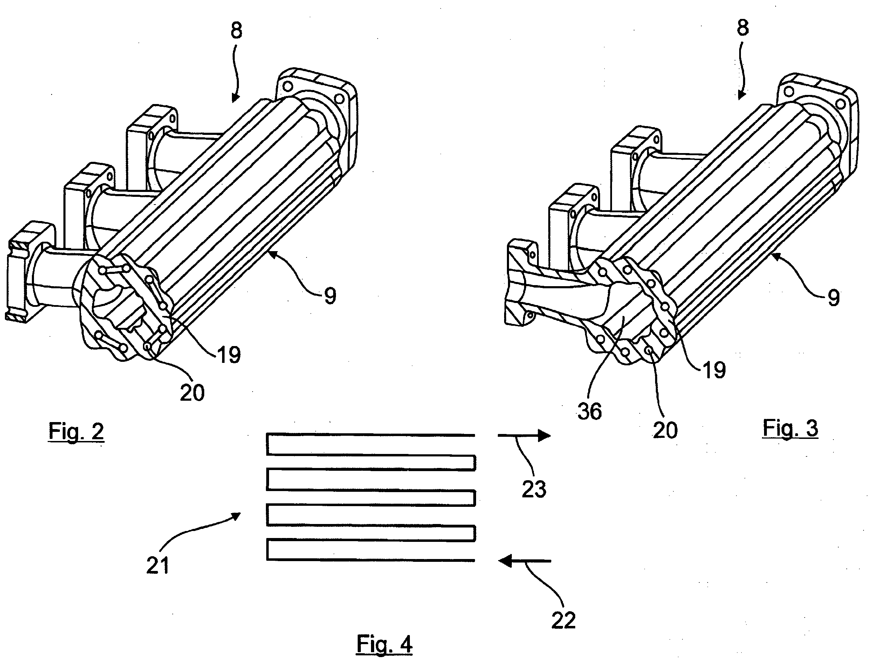

Das flüssige Arbeitsmedium wird damit bei einem Druck von ca. 60 bar auf zirka 500° bis 600°C erhitzt und vom Ausgang des Niedertemperatur-Wärmetauschers WT1 mit einer Arbeitsmediumleitung 14 (unter Umgehung des Katalysators 10) dem Eingang eines Hochtemperatur-Wärmetauschers WT2 zugeführt, der im Abgaskrümmer 8 integriert ist. Dazu sind in der Wandung des Abgaskrümmers 8 bzw. des Abgassammelrohrs 9 längsverlaufende Strömungskanäle 15, 15' angeordnet, deren konkrete Anordnung anhand der Fig. 2 bis 4 erläutert wird.

Das flüssig in den Hochtemperatur-Wärmetauscher WT2 mit einer Temperatur von zirka 500°C bis 600°C gelangende Arbeitsmedium wird dann im Hochtemperatur-Wärmetauscher WT2 bis zu dessen Ausgang auf zirka 600° bis 700°C weiter erhitzt und gegebenenfalls nach einer Drosselstelle verdampft und über eine Arbeitsmediumleitung bzw. -kanal 16 dem Dampfzylinder 4 über ein Dampf-Einlassventil 17 zugeführt.

Das dem Dampfzylinder 4 zugeführte überhitzte Arbeitsmedium expandiert im Dampfzylinder 4 und leistet dabei mechanische Arbeit, welche direkt an die Kurbelwelle weitergegeben wird.

Den beiden Dampfzylindern 4, 4' ist ein gemeinsamer Kondensator 18 als Kondensations-Wärmetauscher/Kühler WT3 nachgeschaltet, in dem das entspannte Arbeitsmedium wieder verflüssigt wird und über den Sammelbehälter 12 in den Arbeitsmedium-Kreisprozess zurückgeführt wird.

In den Fig. 2 und 3 ist jeweils ein Abgaskrümmer 8 mit integriertem Hochtemperatur-Wärmetauscher WT2 mit unterschiedlichen Querschnitten konkret dargestellt. Der Abgaskrümmer 8 weist ein langgestrecktes Abgassammelrohr 9 auf, in dessen Wandung 19 im Wandungsumfang verteilt hier acht Strömungskanäle 20 für das Arbeitsmedium achsparallel nahezu über die gesamte Länge des Abgassammelrohrs 9 in Längsrippen 36 verlaufen, wie dies insbesondere aus dem Schnitt Fig. 3 ersichtlich ist.

Um das Arbeitsmedium für einen hohen Wärmeübergang im Abgassammelrohr 9 mit hoher Verweildauer zu halten, sind jeweils zwei nebeneinanderliegende Strömungskanäle 20 endseitig zu einer mäanderförmigen Strömungskanalanordnung 21 verbunden, wie dies aus dem Schnitt der Fig. 2 ersichtlich ist und in Fig. 4 schematisch dargestellt ist. Die Strömungskanalanordnung 21 weist eine Arbeitsmediumzuführung 22 auf, die zweckmäßig gegenüberliegend zum Dampfzylinder angeordnet ist sowie einen Arbeitsmediumaustritt 23 für das überhitzte Arbeitsmedium, der zweckmäßig unmittelbar am zugeordneten Dampfzylinder 4 liegt.

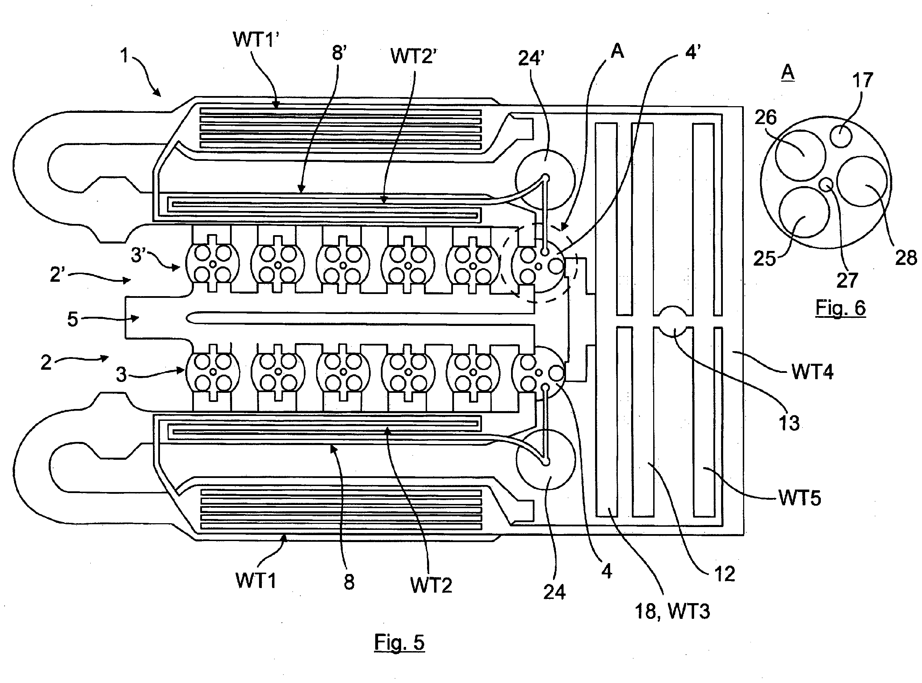

In Fig. 5 ist eine schematische Draufsicht auf eine V12-Brennkraftmaschine mit innermotorischer Abgaswärmenutzung dargestellt, die weitgehend Fig. 1 entspricht, so dass für gleiche Teile die dort verwendeten Bezugszeichen auch in Fig. 5 verwendet sind und in Verbindung mit Fig. 5 im Wesentlichen die Unterschiede/Ergänzungen zu Fig. 1 erläutert werden:

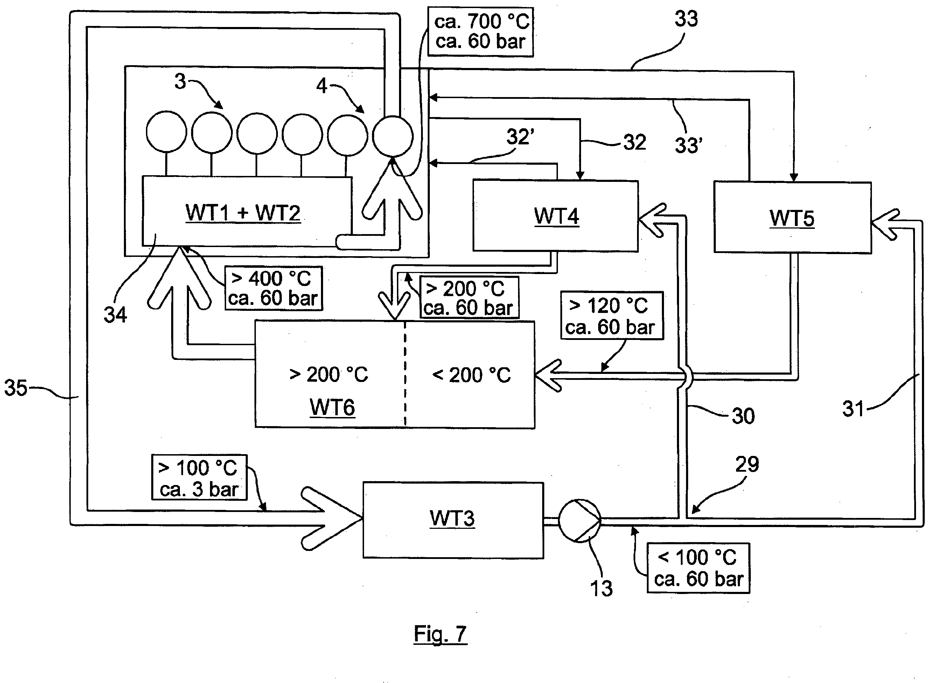

Die Brennkraftmaschine in Fig. 5 umfasst eine Aufladung mit einem (nicht im Detail dargestellten) Turbolader, von dessen Vorrichtung lediglich schematisch ein Ladeluftkühler dargestellt ist, durch den nach einer Speisepumpe 13 das Arbeitsmedium als Ladeluft-Wärmetauscher WT4 geführt ist. Zudem ist hier das Arbeitsmedium durch einen Kühlwasserkühler als Kühlwasser-Wärmetauscher WT5 geleitet. Der Ladeluft-Wärmetaucher WT4 und der Kühlwasser-Wärmetauscher WT5 werden hier bezüglich des Arbeitsmediums parallel betrieben; Details dazu werden in Verbindung mit Fig. 7 erläutert.

Ausgehend vom Ladeluft-Wärmetauscher WT4 wird auch hier das Arbeitsmedium über die den beiden Zylinderbänken 2, 2' zugeordneten Niedertemperatur-Wärmetauscher WT1, WT1' dem in den Wandungen der Abgaskrümmer 8, 8' integrierten Hochtemperatur-Wärmetauschern WT2, WT2' zugeführt, wobei das Arbeitsmedium durch die stufenförmige Erwärmung mittels der Ladeluft-Wärmetauscher WT4, WT4', der Kühlwasser-Wärmetauscher WT5, WT5', der Niedertemperatur-Wärmetauscher WT1, WT1' und der Hochtemperatur-Wärmetauscher WT2, WT2' mit einer Temperatur von zirka 700°C und einem Druck von zirka 60 bar für die Dampfzylinder 4, 4' zur Verfügung steht.

Bei der Brennkraftmaschine nach Fig. 1 sind die Dampfzylinder 4, 4' ausschließlich für einen Dampfbetrieb ausgelegt und vorgesehen. Im Unterschied dazu können die Dampfzylinder 4, 4' bei der Brennkraftmaschine nach Fig. 5 zwischen einem Dampfbetrieb und einem Verbrennungsbetrieb umgeschaltet werden. Dazu ist jeweils den Hochtemperatur-Wärmetauschern WT2, WT2' ein Dampfpuffer 24, 24' nachgeschaltet, aus dem jeweils die Dampfzylinder 4, 4' gespeist werden. Die Dampfzufuhr aus den Dampfpuffern 24, 24' zu den Dampfzylindern 4, 4' kann insbesondere in einer Aufwärmphase oder im Teillastbereich, wenn die Wärmeenergie für einen Dampfbetrieb noch nicht effektiv ausreicht, gesperrt werden, so dass sich Dampf jeweils im Dampfpuffer 24, 24' sammeln kann.

In dieser Zeit können dann die Dampfzylinder 4, 4' als Verbrennungszylinder betrieben werden, wobei über Lufteinlassventile 25 und Abgasauslassventile 26 eine jeweils zugeordnete Verbindung zur Luftzufuhrstrecke 5 und zu den Abgaskrümmern 8, 8' hergestellt wird. Zudem ist wie bei den übrigen Verbrennungszylindern 3, 3' eine kleine Injektor- bzw. Kerzenöffnung 27 zentrisch vorgesehen. Für den umschaltbaren Dampfbetrieb ist zudem jeweils das Dampfeinlassventil 17 erforderlich, an das die Leitung vom Dampfpuffer 24, 24' angeschlossen ist sowie ein Dampfauslassventil 28 (siehe Fig. 6). Die Ventile werden je nach der eingeschalteten Betriebsart geeignet gesteuert.

In Fig. 7 ist schematisch ein Arbeitsmediumkreislauf eines Sechs-Zylinder-Turbomotors dargestellt mit fünf Verbrennungszylindern 3 und einem Dampfzylinder 4, wobei die Anordnung auch einer Zylinderbank 2 des V12-Turbomotors (ohne Dampfpuffer 24) aus Fig. 5 entspricht:

Aus dem Kondensations-Wärmetauscher WT3 bzw. einem diesem nachgeordneten Arbeitsmedium-Sammelbehälter wird mit der Speisepumpe 13 das Arbeitsmedium in den Arbeitsmediumkreislauf gepumpt mit einem Arbeitsdruck von zirka 60 bar und einer Temperatur < 100°C. Nach der Speisepumpe 13 wird an einer Verzweigungsstelle 29 jeweils ein Teil des Arbeitsmediums mit der Leitung 30 dem Ladeluft-Wärmetauscher WT4 und mit der Leitung 31 den Kühlwasser-Wärmetauscher WT5 zugeführt. Der Ladeluft-Wärmetauscher WT4 ist über die Ladeluftzuführleitung 32 und die Ladeluftabführleitung 32' mit einem (nicht dargestellten) Turbolader verbunden. Ebenso ist der Kühlwasser-Wärmetauscher WT5 mit einer Kühlwasser-Zuführleitung 33 und mit einer Kühlwasser-Abführleitung 33' mit den Kühlkanälen des Motorblocks verbunden.

Das Arbeitsmedium aus dem Kühlwasser-Wärmetauscher WT5 wird mit einer Temperatur von zirka > 120°C einem Eingangsbereich einer Mischkammer als Misch-Wärmetauscher WT6 zugeführt. Das Arbeitsmedium aus dem Ladeluft-Wärmetauscher WT4 ist dagegen vergleichsweise wärmer mit zirka > 200°C und wird daher dem Misch-Wärmetauscher WT6 in einem mittleren Bereich zugeführt, so dass sich im Misch-Wärmetauscher WT6 im Eingangsbereich ein Temperaturniveau von zirka < 200°C und in einem Ausgangsbereich von zirka > 200°C einstellt.

Nach dem Misch-Wärmetauscher WT6 wird das Arbeitsmedium hier einem Block 34 zugeführt, der schematisch den Niedertemperatur-Wärmetauscher WT1 und nachgeschaltet den Hochtemperatur-Wärmetauscher WT2 enthalten soll. Wie im Diagramm angegeben wird dabei im Eingangsbereich des Blocks 34 das Arbeitsmedium auf zirka > 400°C erwärmt und am Ausgang mit zirka 700°C und einem Arbeitsdruck von zirka 60 bar dem Dampfzylinder 4 zugeführt. Dort wird es unter Leistung mechanischer Arbeit entspannt und mit der Arbeitsmediumrückführleitung 35 bei einer Temperatur die noch etwas über 100°C liegt und einem Arbeitsdruck von zirka 3 bar zum Kondensations-Wärmetauscher WT3 zurückgeführt, wodurch der Arbeitsmediumkreislauf geschlossen ist.

### Bezugszeichenliste

- 1: Brennkraftmaschine
- 2, 2': Zylinderbank
- 3, 3': Verbrennungszylinder
- 4, 4': Dampfzylinder
- 5: Ansaugstrecke
- 6: Einlassventil
- 7: Auslassventil
- 8, 8': Abgaskrümmer
- 9, 9': Abgassammeirohr
- 10, 10': Katalysator
- 11, 11': Auspuffrohr
- 12: Sammelbehälter
- 13, 13': Speisepumpe
- 14, 14': Arbeitsmediumleitung
- 15, 15': Strömungskanäle
- 16, 16': Arbeitsmediumleitung/-kanal
- 17, 17': Dampf-Einlass-Ventil
- 18: Kondensator
- 19: Wandung
- 20: Strömungskanäle
- 21: Strömungskanalanordnung
- 22: Arbeitsmediumzuführung
- 23: Arbeitsmediumaustritt
- 24, 24': Dampfpuffer
- 25: Luft-Einlassventil
- 26: Abgas-Auslassventil
- 27: Injektor- bzw. Kerzenöffnung
- 28: Dampfauslassventil
- 29: Verzweigungsstelle
- 30: Leitung
- 31: Leitung
- 32: Ladeluft-Zuführleitung
- 32': Ladeluft-Abführleitung
- 33: Kühlwasser-Zuführleitung
- 33': Kühlwasser-Abführleitung
- 34: Block
- 35: Arbeitsmedium-Rückführleitung
- 36: Längsrippen
- WT1, WT1': Niedertemperatur-Wärmetauscher
- WT2, WT2': Hochtemperatur-Wärmetauscher
- WT3: Kondensations-Wärmetauscher
- WT4: Ladeluft-Wärmetauscher
- WT5: Kühlwasser-Wärmetauscher
- WT6: Misch-Wärmetauscher

## Patentansprüche

1. Brennkraftmaschine mit innermotorischer Abgaswärmenutzung,
mit mindestens zwei Zylindern, die mit ihren Kraftübertragungselementen mit einer gemeinsamen Kurbelwelle gekoppelt sind, wobei wenigstens ein Zylinder als Verbrennungszylinder (3) mit einem Verbrennungsprozess betrieben wird und von dort das Abgas in einem Abgaskrümmer (8) abgeführt wird, wobei die dabei anfallende Wärme eines Abgases mittels zumindest eines Wärmetauschers an ein Arbeitsmedium zu dessen Verdampfung in einem geschlossenen Arbeitsmedium-Kreisprozess übertragen wird, und wobei wenigstens ein Zylinder als Dampfzylinder (4) mit Arbeitsmediumdampf betrieben wird,
**dadurch gekennzeichnet,**
**dass** zumindest ein Wärmetauscher (WT2) in der Wandung eines Abgaskrümmers (8) dergestalt integriert ist, dass in der Wandung (19) wenigstens ein Strömungskanal (20) für das Arbeitsmedium angeordnet ist,
**dass** die Brennkraftmaschine zwischen einem kombinierten Verbrennungsbetrieb/Dampfbetrieb auf einen reinen Verbrennungsbetrieb mit allen Zylindern (3, 4) während einer Aufwärmphase oder in einem Teillastbereich umschaltbar ist, wobei für den reinen Verbrennungsbetrieb jeweils an einem Dampfzylinder (4) zusätzlich zu einem Dampfeinlassventil (17) und Dampfauslassventil (28) eine schaltbare Treibstoffzuführung, ein dem Verbrennungsbetrieb zugeordnetes Einlassventil (25) und Auslassventil (26) mit schaltbarer Ventilsteuerung und eine Abgasleitung zum Abgaskrümmer (8) angeordnet sind, und
**dass** für einen reinen Verbrennungsbetrieb ein Dampfpuffer (24) als thermoisolierter Gasbehälter zwischen dem Hochtemperatur-Wärmetauscher (WT2) und einem nachgeordneten Dampfzylinder (4) angeordnet ist.

2. Brennkraftmaschine nach Anspruch 1, **dadurch gekennzeichnet, dass** mehrere Verbrennungszylinder (3) vorgesehen sind und die Anzahl der Verbrennungszylinder (3) größer ist als die Anzahl der Dampfzylinder (4), vorzugsweise in einem Verhältnis von 5:1.

3. Brennkraftmaschine nach Anspruch 1 oder Anspruch 2, **dadurch gekennzeichnet, dass** der Abgaskrümmer (8) ein langgestrecktes Abgassammelrohr (9) aufweist, an das mehrere Verbrennungszylinder (3) in Reihe angeschlossen sind und die Strömungskanäle (20) für das Arbeitsmedium im Wandungsumfang verteilt in Längsrichtung des Abgassammelrohrs (9) verlaufen.

4. Brennkraftmaschine nach Anspruch 3, **dadurch gekennzeichnet,**
**dass** an einem Ende einer Reihe von Verbrennungszylinder (3) der wenigstens eine Dampfzylinder (4) angeordnet ist, und
**dass** der Abgasausgang des Abgassammelrohrs (9) und die Arbeitsmediumzuführung zu der Strömungskanalanordnung (21) in der Abgassammelrohrwandung gegenüberliegend zum wenigstens einen Dampfzylinder (4) liegt und der Arbeitsmediumaustritt aus der Strömungskanalanordnung (21) beim Dampfzylinder (4) liegt.

5. Brennkraftmaschine nach einem der Ansprüche 1 bis 4, **dadurch gekennzeichnet, dass** zu einer Konktatflächenvergrößerung zwischen radial innenliegender Mantelfläche des Abgaskrümmers (8), insbesondere dessen Abgassammelrohrs (9), und des durchströmendem Abgases Flächenstrukturen, insbesondere Längsrippen (36), angeordnet sind und/oder zu einer Vergrößerung der Verweildauer des durch die Strömungskanäle (20) strömenden Arbeitsmediums die Strömungskanalanordnung (21) mäanderförmig gestaltet ist.

6. Brennkraftmaschine nach einem der Ansprüche 1 bis 5, **dadurch gekennzeichnet, dass** dem in der Wandung (19) eines Abgaskrümmers (8) ausgebildeten Wärmetauscher als Hochtemperatur-Wärmetauscher (WT2) stromauf bezüglich des Arbeitsmediums und stromab bezüglich des Abgases wenigstens ein weiterer, abgasbeheizter Niedertemperatur-Wärmetauscher (WT1) vorgeschaltet ist, der vorzugsweise in einer Abgasanlage nach einem Katalysator (10) in einem Auspuffrohr (11) ausgebildet ist.

7. Brennkraftmaschine nach einem der Ansprüche 1 bis 6, **dadurch gekennzeichnet,**
**dass** die Brennkraftmaschine (1) mit dem/den Verbrennungszylindern (3) mit einem Abgasturbolader umfassend einen Ladeluftkühler und einen Kühlwasserkühler ausgebildet ist, wobei parallel jeweils ein Teil der Arbeitsmediums des geschlossen Arbeitsmedium-Kreisprozesses durch den Ladeluftkühler als Ladeluft-Wärmetauscher (WT4) und durch den Kühlwasserkühler als Kühlwasser-Wärmetauscher (WT5) geleitet werden, und
**dass** das relativ kühlere Arbeitsmedium nach dem Kühlwasser-Wärmetauscher (WT5) einem Eingangsbereich eines Misch-Wärmetauscher (WT6) und das relativ heißere Arbeitsmedium nach dem Ladeluft-Wärmetauscher (WT4) einem mittleren Bereich des Misch-Wärmetauschers (WT6) zugeführt wird und der Misch-Wärmetauscher (WT6) dem Niedertemperatur-Wärmetauscher (WT1) und/oder dem Hochtemperatur-Wärmetauscher (WT2) vorgeschaltet ist.

8. Brennkraftmaschine nach einem der Ansprüche 1 bis 7, **dadurch gekennzeichnet, dass** in einer Arbeitsmediumleitung (16) zwischen dem Hochtemperatur-Wärmetauscher (WT2) und dem Dampfzylinder (4) eine Drossel, vorzugsweise eine einstellbare Drossel, angeordnet ist.

9. Brennkraftmaschine nach einem der Ansprüche 1 bis 8, **dadurch gekennzeichnet, dass** im Dampfbetrieb nach dem Dampfzylinder (4) der entspannte Dampf des Arbeitsmediums einem Kondensator (18) als Kondensationswärmetauscher (WT6) oder Kondensationskühler zuführbar ist und das dort verflüssigte Arbeitsmedium in einen Vorratsbehälter (12) leitbar ist, welchem eine Speisepumpe (13) zur Förderung des Arbeitsmediums zu den nachgeordneten Wärmetauschern nachgeschaltet ist.

10. Brennkraftmaschine nach Anspruch 9, **dadurch gekennzeichnet, dass** für das Arbeitsmedium eine druck- und/oder temperaturabhängig schaltbare Bypassleitung für den Dampfzylinder (4) vorgesehen ist, mit der bei noch nicht ausreichender Temperatur für einen Dampfbetrieb noch ganz oder teilweise flüssiges Arbeitsmedium am Dampfzylinder (4) vorbei zum Kondensator/Vorratsbehälter (18/12) leitbar ist.

11. Brennkraftmaschine nach einem der Ansprüche 1 bis 10, **dadurch gekennzeichnet, dass** das Arbeitsmedium durch Ethanol oder destilliertes Wasser gebildet ist.

12. Brennkraftmaschine nach einem der Ansprüche 1 bis 11, **dadurch gekennzeichnet, dass** ein Arbeitsmedium-Blowby mittels wenigstens eines Abscheiders und/oder mittels wenigstens einer Lüftungsöffnung aus dem Motorinnenraum evakuierbar ist.

13. Verfahren zum Betreiben einer Brennkraftmaschine mit innermotorischer Abgaswärmenutzung nach einem der vorhergehenden Ansprüche.

14. Fahrzeug, insbesondere Nutzfahrzeug, mit einer Brennkraftmaschine nach einem der vorhergehenden Ansprüche.

## Claims

1. Internal combustion engine with engine-internal exhaust-gas heat utilization,
having at least two cylinders which are coupled by means of their power transmission elements to a common crankshaft, wherein at least one cylinder is operated as a combustion cylinder (3) with a combustion process, and exhaust gas is discharged from there into an exhaust manifold (8), wherein the exhaust-gas heat that arises here is transferred by means of at least one heat exchanger to a working medium in order to evaporate said working medium in a closed working medium cycle, and wherein at least one cylinder is operated as a vapour cylinder (4) with working medium vapour,
**characterized**
**in that** at least one heat exchanger (WT2) is integrated in the wall of an exhaust manifold (8) such that at least one flow duct (20) for the working medium is arranged in the wall (19),
**in that** the internal combustion engine can be switched between a combined combustion mode/vapour mode and a purely combustion mode with all cylinders (3, 4) during a warm-up phase or in a part-load range, wherein, for the purely combustion mode, a switchable fuel supply, an inlet valve (25) and outlet valve (26), which are assigned to the combustion mode and which have switchable valve control, and an exhaust line to the exhaust manifold (8) are in each case arranged at a vapour cylinder (4) in addition to a vapour inlet valve (17) and vapour outlet valve (28), and
**in that**, for a purely combustion mode, a vapour buffer (24) is arranged as a thermally insulated gas vessel between the high-temperature heat exchanger (WT2) and a downstream vapour cylinder (4).

2. Internal combustion engine according to Claim 1, **characterized in that** multiple combustion cylinders (3) are provided, and the number of combustion cylinders (3) is greater than the number of vapour cylinders (4), preferably in a ratio of 5:1.

3. Internal combustion engine according to Claim 1 or Claim 2,
**characterized in that** the exhaust manifold (8) has an elongate exhaust-gas collecting pipe (9) to which multiple combustion cylinders (3) are connected in a row, and the flow ducts (20) for the working medium run, so as to be distributed over the wall circumference, in the longitudinal direction of the exhaust-gas collecting pipe (9).

4. Internal combustion engine according to Claim 3, **characterized**
**in that** the at least one vapour cylinder (4) is arranged at one end of a row of combustion cylinders (3), and
**in that** the exhaust-gas outlet of the exhaust-gas collecting pipe (9) and the working medium supply to the flow duct arrangement (21) are situated in the exhaust-gas collecting pipe wall opposite the at least one vapour cylinder (4), and the working medium outlet from the flow duct arrangement (21) is situated at the vapour cylinder (4).

5. Internal combustion engine according to one of Claims 1 to 4,
**characterized in that** areal structures, in particular longitudinal ribs (36), are arranged between the radially inner shell surface of the exhaust manifold (8), in particular the exhaust-gas collecting pipe (9) thereof, and the throughflowing exhaust gas for the purposes of enlarging a contact area, and/or the flow duct arrangement (21) is of meandering design for the purposes of increasing the dwell time of the working medium flowing through the flow duct (20).

6. Internal combustion engine according to one of Claims 1 to 5,
**characterized in that**, in relation to the heat exchanger as high-temperature heat exchanger (WT2) formed in the wall (19) of an exhaust manifold (8), at least one further, exhaust-gas-heated low-temperature heat exchanger (WT1) is connected upstream with respect to the working medium and downstream with respect to the exhaust gas, which at least one low-temperature heat exchanger is preferably formed in an exhaust system downstream of a catalytic converter (10) in an exhaust tailpipe (11).

7. Internal combustion engine according to one of Claims 1 to 6,
characterized
and that the internal combustion engine (1) with the one or more combustion cylinders (3) is formed with an exhaust-gas turbocharger comprising a charge-air cooler and a cooling-water cooler, wherein, in parallel, in each case one fraction of the working medium of the closed working medium cycle is conducted through the charge-air cooler as charge-heat exchanger (WT4) and through the cooling-water cooler as cooling-water heat exchanger (WT5), and
in that the relatively cool working medium downstream of the cooling water heat exchanger (WT5) is supplied to an inlet region of a mixing heat exchanger (WT6), and the relatively hot working medium downstream of the charge-air heat exchanger (WT4) is supplied to a central region of the mixing heat exchanger (WT6), and the mixing heat exchanger (WT6) is connected upstream of the low-temperature heat exchanger (WT1) and/or of the high-temperature heat exchanger (WT2).

8. Internal combustion engine according to one of Claims 1 to 7,
**characterized in that** a throttle, preferably an adjustable throttle, is arranged in a working medium line (16) between the high-temperature heat exchanger (WT2) and the vapour cylinder (4).

9. Internal combustion engine according to one of Claims 1 to 8,
**characterized in that**, in the vapour mode, downstream of the vapour cylinder (4), the expanded vapour of the working medium can be supplied to a condenser (18) as condensation heat exchanger (WT6) or condensation cooler, and the working medium liquefied there can be conducted into a reservoir vessel (12), downstream of which there is connected a feed pump (13) for conveying the working medium to the downstream heat exchangers.

10. Internal combustion engine according to Claim 9, **characterized in that**, for the working medium, a bypass line which is switchable in pressure-dependent and/or temperature-dependent fashion is provided for the vapour cylinder (4), by means of which bypass line, in the presence of a temperature that is not yet sufficient for a vapour mode, working medium that is still entirely or partially liquid can be conducted past the vapour cylinder (4) to the condenser/reservoir vessel (18/12).

11. Internal combustion engine according to one of Claims 1 to 10,
**characterized in that** the working medium is formed by ethanol or distilled water.

12. Internal combustion engine according to one of Claims 1 to 11,
**characterized in that** working medium blow-by can be evacuated from the engine interior space by means of at least one separator and/or by means of at least one ventilation opening.

13. Method for operating an internal combustion engine with engine-internal exhaust-gas heat utilization according to one of the preceding claims.

14. Vehicle, in particular utility vehicle, having an internal combustion engine according to one of the preceding claims.

## Revendications

1. Moteur à combustion interne ayant un système de récupération de la chaleur des gaz d'échappement intégré, avec au moins deux cylindres, qui sont couplés à un vilebrequin commun au moyen de leurs éléments de transmission de force, dans lequel au moins un cylindre fonctionne en cylindre de combustion (3) avec un processus de combustion et le gaz d'échappement est évacué de celui-ci dans un collecteur de gaz d'échappement (8), dans lequel la chaleur ainsi produite d'une gaz d'échappement est transmise à un fluide de travail au moyen d'au moins un échangeur de chaleur en vue de sa vaporisation dans un processus de fluide de travail en circuit fermé, et dans lequel au moins un cylindre fonctionne en cylindre à vapeur (4) avec de la vapeur de fluide de travail,
**caractérisé en ce que**
au moins un échangeur de chaleur (WT2) est intégré dans la paroi d'un collecteur de gaz d'échappement (8), de telle manière qu'un canal d'écoulement (20) pour le fluide de travail soit disposé dans la paroi (19),
le moteur à combustion interne peut être commuté entre un fonctionnement combiné à combustion/à vapeur et un fonctionnement à combustion pur avec tous les cylindres (3, 4) pendant une phase de chauffage ou un domaine à charge partielle, dans lequel pour le fonctionnement à combustion pur, une arrivée de carburant commutable, une soupape d'admission (25) associée au fonctionnement à combustion et une soupape d'échappement (26) avec une commande de soupapes et une conduite de gaz d'échappement vers le collecteur de gaz d'échappement (8) sont disposées respectivement à un cylindre à vapeur (4) en plus d'une soupape d'admission de vapeur (17) et d'une soupape d'échappement de vapeur (28), et
pour un fonctionnement à combustion pur, un tampon de vapeur (24) en tant que réservoir de gaz calorifugé est disposé entre l'échangeur de chaleur à haute température (WT2) et un cylindre à vapeur qui suit (4).

2. Moteur à combustion interne selon la revendication 1, **caractérisé en ce qu'**il est prévu plusieurs cylindres de combustion (3) et le nombre des cylindres de combustion (3) est supérieur au nombre des cylindres à vapeur (4), de préférence dans un rapport 5:1.

3. Moteur à combustion interne selon la revendication 1 ou la revendication 2, **caractérisé en ce que** le collecteur de gaz d'échappement (8) présente un tube de collecte de gaz d'échappement allongé (9), auquel plusieurs cylindres de combustion (3) sont raccordés en ligne et les canaux d'écoulement (20) pour le fluide de travail s'étendent dans la direction longitudinale du tube de collecte de gaz d'échappement (9) en étant répartis dans le pourtour de la paroi.

4. Moteur à combustion interne selon la revendication 3, **caractérisé en ce que** ledit au moins un cylindre à vapeur (4) est disposé à une extrémité d'une ligne de cylindres de combustion (3), et **en ce que** la sortie de gaz d'échappement du tube de collecte de gaz d'échappement (9) et l'arrivée de fluide de travail vers le dispositif de canal d'écoulement (21) dans la paroi du tube de collecte de gaz d'échappement est située à l'opposé dudit au moins un cylindre à vapeur (4) et la sortie de fluide de travail hors du dispositif de canal d'écoulement (21) est située près du cylindre à vapeur (4).

5. Moteur à combustion interne selon l'une quelconque des revendications 1 à 4, **caractérisé en ce que** des structures plates, en particulier des nervures longitudinales (36), sont disposées en vue d'accroître la surface de contact entre la surface latérale radialement intérieure du collecteur de gaz d'échappement (8), en particulier de son tube de collecte de gaz d'échappement (9), et les gaz d'échappement en écoulement, et/ou le dispositif de canal d'écoulement (21) est de forme sinueuse afin d'augmenter la durée de séjour du fluide de travail s'écoulant à travers les canaux d'écoulement (20).

6. Moteur à combustion interne selon l'une quelconque des revendications 1 à 5, **caractérisé en ce qu'**au moins un autre échangeur de chaleur à basse température (WT1), chauffé par les gaz d'échappement, est disposé en amont de l'échangeur de chaleur formé dans la paroi (19) d'un collecteur de gaz d'échappement (8) en tant qu'échangeur de chaleur à haute température (WT2), en amont par rapport au fluide de travail et en aval par rapport aux gaz d'échappement, et est de préférence formé dans une installation de gaz d'échappement après un catalyseur (10) dans un tuyau d'échappement (11).

7. Moteur à combustion interne selon l'une quelconque des revendications 1 à 6, **caractérisé en ce que**
le moteur à combustion interne (1) avec le/les cylindre(s) de combustion (3) est réalisé avec un turbocompresseur à gaz d'échappement comprenant un refroidisseur d'air de suralimentation et un refroidisseur d'eau de refroidissement, dans lequel en parallèle une partie du fluide de travail du processus de fluide de travail en circuit fermé est conduite respectivement à travers le refroidisseur d'air de suralimentation en tant qu'échangeur de chaleur de l'air de suralimentation (WT4) et à travers le refroidisseur d'eau de refroidissement en tant qu'échangeur de chaleur de l'eau de refroidissement (WT5), et
le fluide de travail relativement plus froid après l'échangeur de chaleur de l'eau de refroidissement (WT5) est envoyé à une zone d'entrée d'un échangeur de chaleur mixte (WT6) et le fluide de travail relativement plus chaud après l'échangeur de chaleur de l'air de suralimentation (WT4) est envoyé à une zone médiane de l'échangeur de chaleur mixte ((WT6) et l'échangeur de chaleur mixte (WT6) est disposé en amont de l'échangeur de chaleur à basse température (WT1) et/ou de l'échangeur de chaleur à haute température (WT2).

8. Moteur à combustion interne selon l'une quelconque des revendications 1 à 7, **caractérisé en ce qu'**un étranglement, de préférence un étranglement réglable, est disposé entre l'échangeur de chaleur à haute température (WT2) et le cylindre à vapeur (4).

9. Moteur à combustion interne selon l'une quelconque des revendications 1 à 8, **caractérisé en ce que** dans le fonctionnement à la vapeur, la vapeur détendue du fluide de travail après le cylindre à vapeur (4) peut être envoyée à un condenseur (18) en tant qu'échangeur de chaleur à condensation (WT6) ou refroidisseur à condensation et le fluide de travail liquéfié ici peut être conduit à un réservoir de stockage (12), en aval duquel une pompe d'alimentation (13) est montée pour le transport du fluide de travail aux échangeurs de chaleur qui suivent.

10. Moteur à combustion interne selon la revendication 9, **caractérisé en ce qu'**il est prévu pour le fluide de travail une conduite de dérivation commutable en fonction de la pression et/ou de la température pour le cylindre à vapeur (4), avec laquelle, lorsque la température n'est pas encore suffisante pour un fonctionnement à la vapeur, du fluide de travail encore entièrement ou partiellement liquide peut être conduit le long du cylindre à vapeur (4) vers le condenseur/réservoir de stockage (18/12).

11. Moteur à combustion interne selon l'une quelconque des revendications 1 à 10, **caractérisé en ce que** le fluide de travail est formé par l'éthanol ou l'eau distillée.

12. Moteur à combustion interne selon l'une quelconque des revendications 1 à 11, **caractérisé en ce qu'**une fuite de fluide de travail peut être évacuée hors du volume intérieur du moteur au moyen d'au moins un séparateur et/ou au moyen d'au moins une ouverture de ventilation.

13. Procédé de conduite d'un moteur à combustion interne ayant un système de récupération de la chaleur des gaz d'échappement intégré selon l'une quelconque des revendications précédentes.

14. Véhicule, en particulier véhicule utilitaire, avec un moteur à combustion interne selon l'une quelconque des revendications précédentes.
